(19) Europäisches Patentamt

European Patent Office

Office européen des brevets

(11) Veröffentlichungsnummer: **0 513 525 A1**

## (12) EUROPÄISCHE PATENTANMELDUNG

(21) Anmeldenummer: **92106111.5**

(22) Anmeldetag: **09.04.92**

(51) Int. Cl.5: **A01K 11/00**

(30) Priorität: **08.05.91 DE 4115031**

(43) Veröffentlichungstag der Anmeldung:
**19.11.92 Patentblatt 92/47**

(84) Benannte Vertragsstaaten:
**DE ES FR GB IT NL**

(71) Anmelder: **Nehls, Reinhard**
**Siedlerstrasse 5**
**W-4290 Bocholt-Hemden(DE)**

(72) Erfinder: **Hattersley, Bob**
**Spring Croft, Sibbertoft**
**Market Harborough LE16 9UA(GB)**

(74) Vertreter: **Peerbooms, Rudolf, Dipl.-Phys.**
**Postfach 200 208 Dickmannstrasse 45c**
**W-5600 Wuppertal 2(DE)**

(54) **Ohrmarkenzange.**

(57) Eine Ohrmarkenzange weist an ihren Zangenbacken (33, 34) Aufnahmen (10, 11) zur vorübergehenden zangenseitigen Lagefixierung der am Tierohr anzubringenden Ohrmarke bzw. Ohrmarkenhälften auf. Zur Erzielung einer universell für die verschiedensten Ohrmarkentypen einsetzbaren Ohrmarkenzange sind dieser auswechselbare, jeweils unterschiedlichen Ohrmarkentypen angepaßte Aufnahmen (10, 11) für die Ohrmarkenhälften zugeordnet, wobei die Aufnahmen vorzugsweise aus lösbar an den Zangenbacken (33, 34) befestigbaren Adapterstücken (43, 44) bestehen können.

Fig. 4

EP 0 513 525 A1

Die Erfindung betrifft eine Ohrmarkenzange, deren Zangenbacken Aufnahmen zur vorübergehenden zangenseitigen Lagefixierung der am Tierohr anzubringenden Ohrmarke, bzw. Ohrmarkenhälften, aufweisen.

Ohrmarken sind im allgemeinen nach Art von zweiteiligen Nieten ausgebildet, von denen ein Teil durch das Tierohr hindurchgestochen und mit dem gegenüberliegenden Nietteil dauerhaft verbunden wird. Da Ohrmarken am lebenden Tier angebracht werden, muß das Anklipsen äußerst rasch vollzogen werden, da das Tier beim Durchstechen des Ohres eine spontane, ruckhafte Bewegung macht, vor der die Ohrmarke bereits dauerhaft angebracht sein muß und während der die Ohrmarke bereits von der Zange wieder gelöst, bzw. leicht von der Zange abziehbar sein muß, damit es nicht zu einem Einreißen des Tierohres kommt. Diese besondere Problematik beim Anbringen von Ohrmarken verlangt präzise und rasch arbeitende Ohrmarkenzangen, an denen die Ohrmarkenhälften einerseits exakt lagefixiert sind, damit sie beim Anheftvorgang genau ineinandergreifen, und andererseits muß die zangenseitige Lagefixierung derart getroffen sein, daß sich die angeheftete Ohrmarke bei einer Bewegung des Tieres sofort von der Ohrmarkenzange löst.

Da in der Praxis unterschiedliche Ohrmarkentypen benötigt werden, z.B. unterschiedliche Ohrmarken für Rinder, Schweine und Schafe oder unterschiedliche Ohrmarken je nach verlangter Kennzeichnungsart, sind bisher zu jedem Ohrmarkentyp speziell angepaßte Ohrmarkenzangen im Einsatz, um in jedem Fall den vorbeschriebenen, aus den spontanen Ruckbewegungen des Tieres sich ergebenden Problemen zu entsprechen. Für Tierhalter sind aber die Anschaffung und Bereithaltung einer größeren Anzahl von unterschiedlichen Ohrmarkenzangen aufwendig und lästig.

Der Erfindung liegt die Aufgabe zugrunde, eine universell verwendbare Ohrmarkenzange zu schaffen.

Ausgehend von einer Ohrmarkenzange der eingangs genannten Art, ist diese Aufgabe dadurch gelöst, daß der Ohrmarkenzange auswechselbare, jeweils unterschiedlichen Ohrmarkentypen angepaßte Aufnahmen für die Ohrmarkenhälften zugeordnet sind.

Durch die Erfindung wird eine Reihe von Vorteilen erreicht. Zum einen braucht der Anwender nur noch eine einzige Ohrmarkenzange und die den von ihm benutzten Ohrmarkentypen angepaßten, auswechselbaren Aufnahmen anzuschaffen, wodurch die Gesamtanschaffungskosten erheblich gesenkt werden, da nur die Ohrmarkenzange ein verhältnismäßig teures Werkzeug darstellt, während die auswechselbaren Aufnahmen als sehr preiswerte Kleinteile ausgebildet werden können. Die auswechselbaren Aufnahmen erwirbt der Anwender passend für die Ohrmarken des jeweiligen Typs, so daß er nur die eine Ohrmarkenzange bereithalten bzw. mitführen muß, was den Gesamtarbeitsablauf vereinfacht und insbesondere eine geordnete, platzsparende Werkzeugaufbewahrung erleichtert. Die Erfindung ermöglicht es auch, die Ohrmarkenzange für noch neu zu schaffende Ohrmarken, die beispielsweise im Zuge gesetzlicher Änderungen bei der Kennzeichnungspflicht künftig verlangt werden können, weiterzubenutzen, da er lediglich die an die neue Ohrmarke angepaßten Aufnahmen in einem solchen Fall noch erwerben muß.

Gemäß einer bevorzugten Ausführungsform der Erfindung können die auswechselbaren Aufnahmen aus an den Zangenbacken lösbar befestigten Adapterstücken bestehen. Solche Adapterstücke können als kleine Kunststoffspritzteile hergestellt werden, die kostenmäßig nicht ins Gewicht fallen. Vorteilhafterweise sind die Adapterstücke T-förmig oder keilförmig und in hinterschnittene bzw. schwalbenschwanzförmige Nuten der Zangenbacken einschiebbar, wodurch einerseits ein sicherer Halt an den Zangenbacken gewährleistet und andererseits eine bequeme Handhabung beim Auswechseln der Aufnahmen ermöglicht ist.

Gemäß einer alternativen Ausführungsform der Erfindung können der Ohrmarkenzange insgesamt auswechselbare Zangenbacken zugeordnet sein, welche den jeweiligen Ohrmarkentypen angepaßte, unterschiedliche Aufnahmen aufweisen. Die Zangenbacken sind dabei vorteilhafterweise in Form von Kunststoffkappen ausgebildet, die auf die Arbeitsschenkel der Ohrmarkenzange klemmend aufsteckbar sind. Der Sitz dieser Zangenbacken an den Zangenschenkeln kann durch leicht lösbare Befestigungselemente, z.B. durch Schrauben oder Splinte, noch zusätzlich gesichert werden.

Bei Ohrmarkenzangen mit Parallelführung der Zangenbacken kann der Erfindung zufolge vorgesehen werden, daß die die Zangenbacken tragenden Parallellenker lösbar an den sich kreuzenden Zangenschenkeln angelenkt sind und daß der Ohrmarkenzange ein Satz hinsichtlich der Ohrmarkenaufnahmen unterschiedlicher Parallellenker zugeordnet ist, die betriebsmäßig austauschbar sind. Bei dieser Ausführungsform können unterschiedlich lange Parallellenker eingesetzt werden, so daß auch sehr große Ohrmarken, z.B. einstückige, um das Tierohr herumzulegende Ohrmarken, bequem angebracht werden können, da ein großer Freiraum zwischen den Zangenbacken und dem Drehpunkt der sich kreuzenden Zangenschenkel zur Verfügung steht.

Weitere Merkmale der Erfindung sind in den Unteransprüchen angegeben.

Die Erfindung wird im folgenden anhand mehrerer in der Zeichnung dargestellter Ausführungsbeispiele näher erläutert. Es zeigen:

Fig. 1     einen ersten Ohrmarkentyp mit zwei zugeordneten, schematisch dargestellten Aufnahmen,

Fig. 2     einen zweiten Ohrmarkentyp mit zugeordneten Aufnahmen,

Fig. 3     einen dritten Ohrmarkentyp mit zugeordneten Aufnahmen,

Fig. 4     ein erstes Ausführungsbeispiel einer Ohrmarkenzange nach der Erfindung,

Fig. 5     in einer Explosivdarstellung eine Zangenbacke der Ohrmarkenzange nach Fig. 4 mit einer in diese Zangenbacke einsetzbaren Aufnahme,

Fig. 6     eine in die gegenüberliegende Zangenbacke einzusetzende Aufnahme,

Fig. 7     ein zweites Ausführungsbeispiel einer Ohrmarkenzange nach der Erfindung,

Fig. 8     in einer perspektivischen Explosivdarstellung einen der auswechselbaren Parallellenker des Ausführungsbeispiels nach Fig. 7,

Fig. 9     in einer perspektivischen Darstellung den anderen auswechselbaren Parallellenker des Ausführungsbeispiels nach Fig. 7 und

Fig.10     ein drittes Ausführungsbeispiel einer Ohrmarkenzange nach der Erfindung.

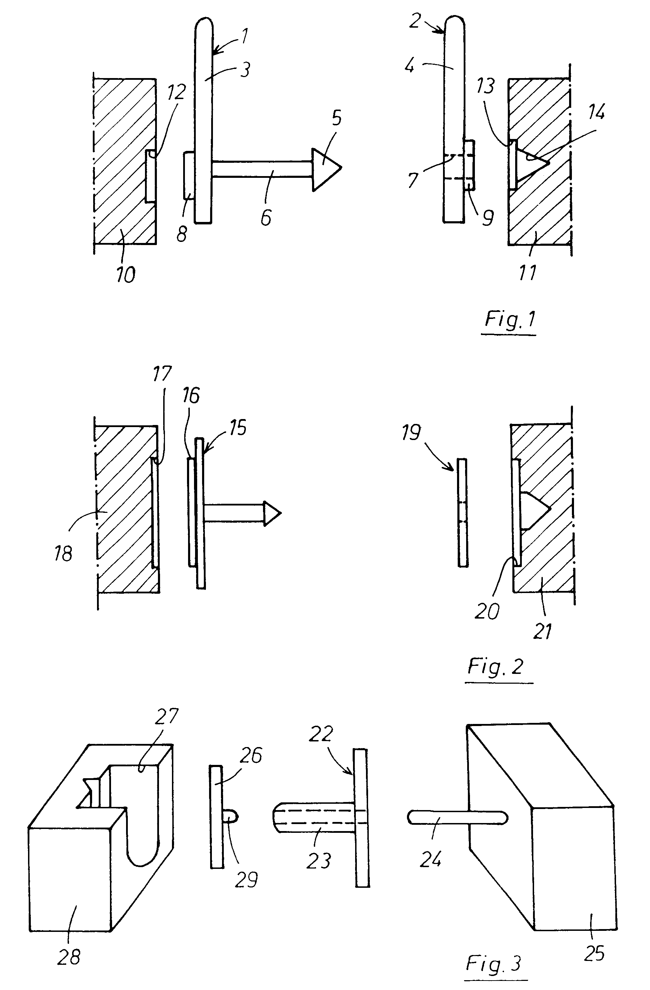

Fig. 1 zeigt eine aus zwei Hälften 1, 2 bestehende Ohrmarke, die jeweils eine Scheibe 3, 4 umfassen. Eine Scheibe 3 trägt einen mit einer Spitze 5 versehenen, durch ein Tierohr hindurchzustechenden Stift 6, dem an der anderen Ohrmarkenhälfte 2 ein Durchgangsloch 7 zugeordnet ist, durch die die als Schnappverbindungsteil ausgebildete Spitze 5 hindurchgesteckt wird. Zur vorübergehenden zangenseitigen Lagefixierung sind die Ohrmarkenhälften 1, 2 an ihren einander abgewandten Seiten jeweils mit einem flachen zylindrischen Stutzen 8, 9 versehen, denen zangenseitig passende Aufnahmen 10, 11 zugeordnet sind. Die Aufnahme 10 weist hierfür eine dem Stutzen 8 eng angepaßte Ausnehmung 12 auf. Die Aufnahme 11 besitzt eine gleichartige zylindrische Ausnehmung 13 für den Stutzen 9, an die sich ein kegeliger Erweiterungsraum 14 zur Aufnahme der Spitze 5 anschließt.

Fig. 2 zeigt eine ähnliche Ohrmarke, bei der die eine Hälfte 15 mit einem verhältnismäßig breiten, flachen Einsteckstutzen 16 in eine Ausnehmung 17 der zugeordneten Aufnahme 18 eingefügt wird, während die andere, als glatte Scheibe ausgebildete Ohrmarkenhälfte 19 vollständig in eine Ausnehmung 20 ihrer zugeordneten Aufnahme 21 eingelegt wird.

Fig. 3 zeigt eine nach Art eines Hohlniets ausgebildete metallische Ohrmarke, deren eine Hälfte 22 einen hohlen Stift 23 aufweist, mit dem sie auf einen Nietdorn 24 ihrer zugeordneten Aufnahme 25 aufgesteckt wird. Die andere Ohrmarkenhälfte 26 wird in eine passende Ausnehmung 27 ihrer Aufnahme 28 eingesetzt und trägt einen in den hohlen Stift 23 eingreifenden Ansatz 29, der vom Dorn 24 gequetscht und in stramme Anlage an die Innenwandung des Stiftes 23 gebracht wird. Wie die Fig. 1 bis 3 beispielhaft veranschaulichen, benötigen die jeweiligen Ohrmarkentypen speziell angepaßte zangenseitige Aufnahmen.

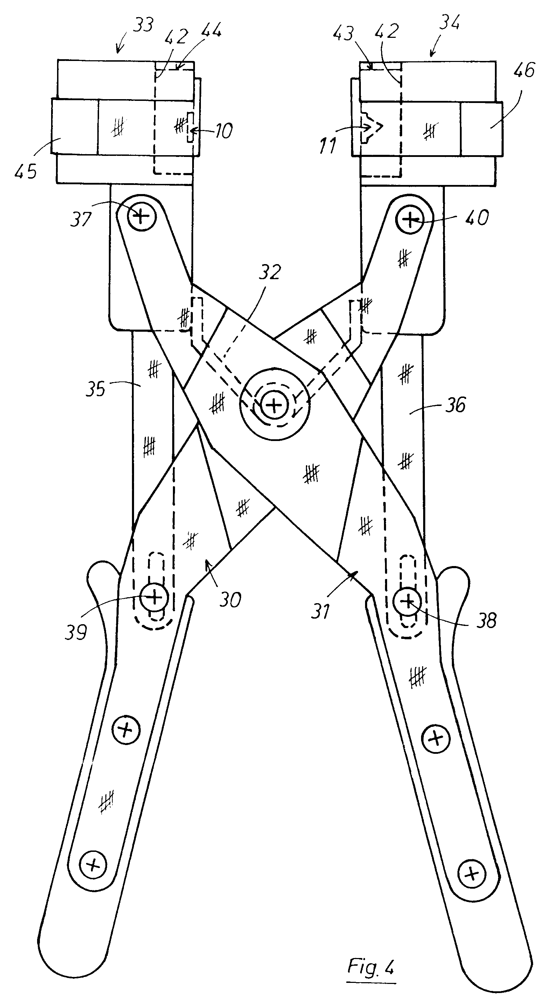

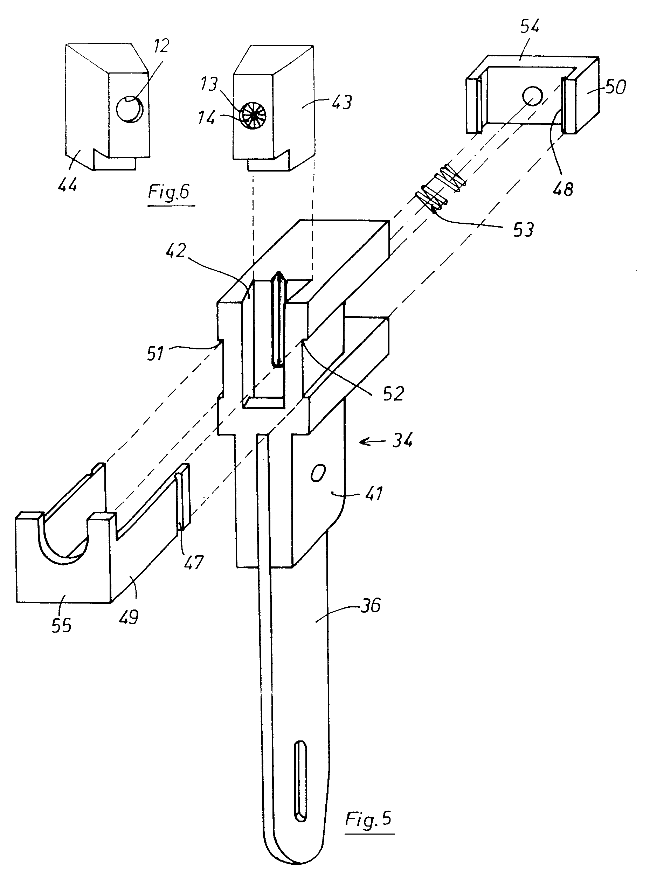

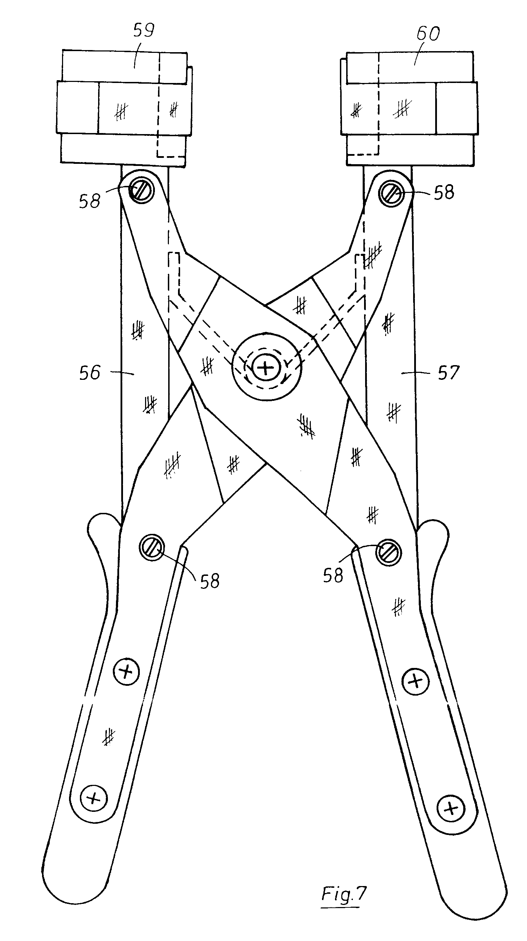

In den Fig. 4 bis 6 ist eine erste Ausführungsform einer für alle Ohrmarkentypen universell verwendbaren Ohrmarkenzange gezeigt. Die Ohrmarkenzange besteht aus zwei sich kreuzenden Zangenschenkeln 30, 31 mit Spreizfeder 32 und aus zwei die Zangenbacken 33 und 34 tragenden Parallellenker 35, 36, die jeweils an den Anlenkpunkten 37, 38, 39, 40 an den Arbeitsschenkel des einen Zangenschenkels und an den Griffschenkel des anderen Zangenschenkels angelenkt sind. Die Zangenbacken 33, 34, vgl. auch Fig. 5, bestehen jeweils aus einem an dem Parallellenker 35 bzw. 36 starr befestigten Kunststoffteil 41, das an seiner Backenseite mit einer nach oben hin offenen schwalbenschwanzförmigen Nut 42 versehen ist, in die ein keilförmiges Adapterstück 43 einschiebbar ist, welches als Aufnahme 11, vgl. Fig. 1, für die Ohrmarkenhälfte 2 ausgebildet ist und dementsprechend die zylindrische Ausnehmung 13 und den kegeligen Erweiterungsraum 14 aufweist. Die gegenüberliegende Zangenbacke 33 ist identisch wie die Zangenbacke 34 ausgebildet, und in ihre schwalbenschwanzförmige Nut wird ein keilförmiges Adapterstück 44 (Fig. 6) eingeschoben, weiches mit der zylindrischen Ausnehmung 12 zur Aufnahme des Stutzens 8 versehen ist.

Beide Zangenbacken 33, 34 tragen ferner eine klemmende Halterung 45, 46 für die eingelegten Ohrmarkenhälften. Diese Halterungen bestehen jeweils aus einem die Zangenbacken umschließenden Bandagering, der aus zwei durch eine Schnappverbindung 47, 48 zusammengehaltenen U-förmigen Teilen 49, 50 besteht und in seitlichen Führungskanälen 51, 52 der Zangenbacken verschiebbar gegen die Kraft einer Druckfeder 53 geführt ist. Die Druckfeder 53 ist zwischen der Rückseite der Zangenbacke und dem rückwärtigen Querschenkel 54 des Bandageringes eingespannt und drückt den gegenüberliegenden, vorderen Querschenkel 55 des Bandageringes gegen die in die Adapterstücke 43 bzw. 44 eingesetzten Ohrmarkenhälften, so daß diese zuverlässig an den Zangenbacken gehalten werden, aber nach dem Zusammennieten sich beim öffnen der Zange durch die Spreizfeder 32 aus den Halterungen 45, 46 lösen. Der Zange nach Fig. 4 ist außer den gezeigten Adapterstücken 43, 44 ein Satz von weiteren Adapterstücken zugeordnet, die jeweils einem speziellen Ohrmarkentyp zugeordnet sind. Unter Auswechseln der Adapterstücke ist somit die Zange universell zur Anbringung der unterschiedlichsten Ohrmarkentypen geeignet.

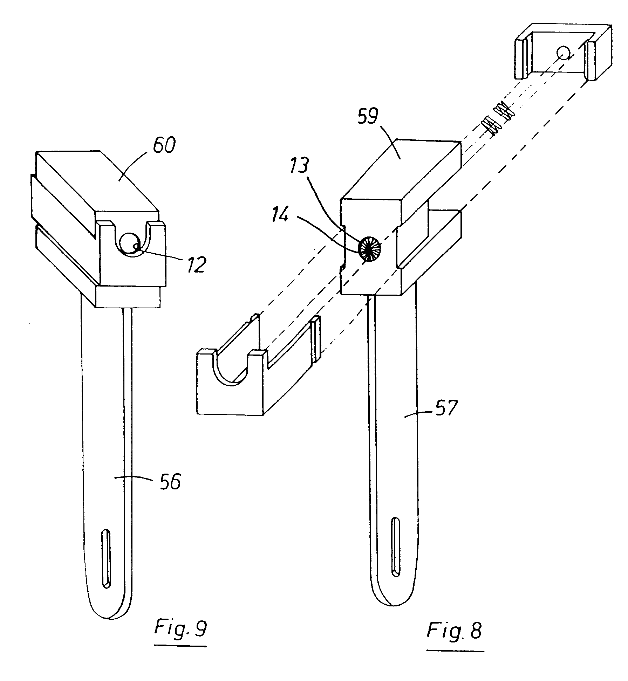

Beim Ausführungsbeispiel nach den Fig. 7 bis 9 sind die Parallellenker 56, 57 jeweils über leicht lösbare Anlenkelemente, hier speziell über Schrauben 58, an die sich kreuzenden Zangenschenkel angelenkt. Die Zangenbacken 59, 60 sind hier als unmittelbare Aufnahmen für die Ohrmarkenhälften ausgebildet und weisen an ihrer Backenseite dementsprechend die zylindrische Ausnehmung 12 bzw. die zylindrische Ausnehmung 13 mit dem kegeligen Erweiterungsraum 14 auf. Der Zange nach Fig. 7 ist ein Satz von hinsichtlich ihrer Aufnahmen den verschiedenen Ohrmarkentypen angepaßten Parallellenkern zugeordnet, so daß die Zange durch Auswechseln ihrer Parallellenker 56, 57 dem jeweiligen Ohrmarkentyp angepaßt werden kann.

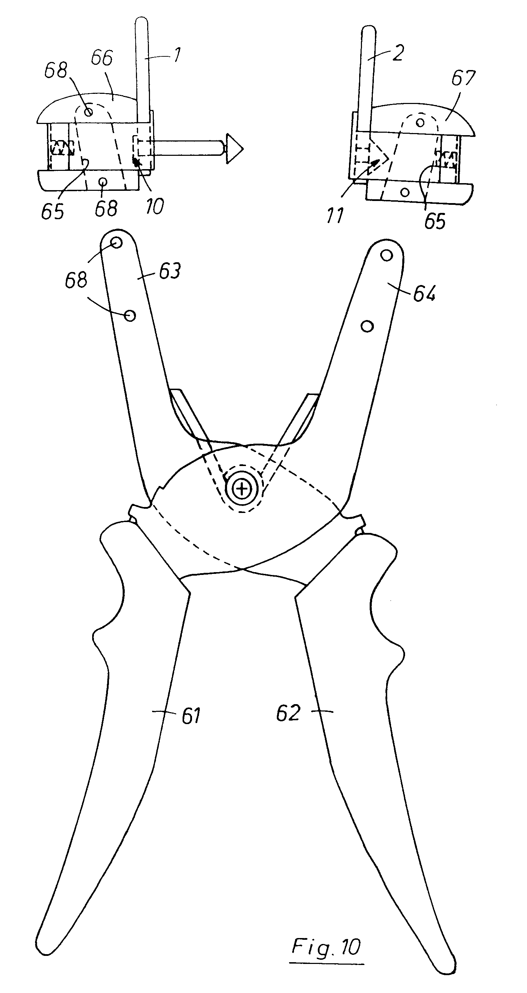

Die Fig. 10 zeigt eine Zange mit zwei sich kreuzenden Zangenschenkeln 61, 62, auf deren Arbeitsschenkeln 63, 64 kappenförmige, mit einer Aufsecköffnung 65 versehene Zangenbacken 66, 67 aufsteckbar sind. An den vorzugsweise aus Kunststoff bestehenden Zangenbacken 66, 67 sind wie beim Ausführungsbeispiel nach Fig. 7 bis 9 die Aufnahmen für die Ohrmarkenhälften 1, 2 unmittelbar ausgebildet, wobei der Zange nunmehr ein Satz von den jeweiligen Ohrmarkentypen angepaßten Zangenbacken 66, 67 zugeordnet ist. Die Zangenbacken werden vorzugsweise klemmend auf die Arbeitsschenkel 63, 64 aufgesteckt. Zur sicheren Fixierung können die Zangenbacken noch durch zusätzliche Schrauben, Splinte oder ähnliche leicht lösbare Elemente aneinander befestigt werden, welche durch an den Zangenbacken 66, 67 und den Arbeitsschenkeln 63, 64 angeordnete Löcher 68 hindurchgesteckt werden. Solche aufsteckbare Zangenbacken 66, 67 können selbstverständlich auch beim Ausführungsbeispiel nach Fig. 7 verwendet und dort auf die freien Enden der Parallellenker 56, 57 aufgesteckt werden.

| Bezugszeichenliste | | | |
|---|---|---|---|
| 1 | Hälfte | 35 | Parallellenker |
| 2 | Hälfte | 36 | Parallellenker |
| 3 | Scheibe | 37 | Anlenkpunkt |
| 4 | Scheibe | 38 | Anlenkpunkt |
| 5 | Spitze | 39 | Anlenkpunkt |
| 6 | Stift | 40 | Anlenkpunkt |
| 7 | Durchgangsloch | 41 | Kunststoffteil |
| 8 | Stutzen | 42 | Nut |
| 9 | Stutzen | 43 | Adapterstück |
| 10 | Aufnahme | 44 | Adapterstück |
| 11 | Aufnahme | 45 | Halterung |
| 12 | Ausnehmung | 46 | Halterung |
| 13 | Ausnehmung | 47 | Schnappverbindung |
| 14 | Erweiterungsraum | 48 | Schnappverbindung |
| 15 | Hälfte | 49 | U-Teil |
| 16 | Einsteckstutzen | 50 | U-Teil |
| 17 | Ausnehmung | 51 | Führungskanal |
| 18 | Aufnahme | 52 | Führungskanal |
| 19 | Ohrmarkenhälfte | 53 | Druckfeder |
| 20 | Ausnehmung | 54 | Querschenkel |
| 21 | Aufnahme | 55 | Querschenkel |
| 22 | Hälfte | 56 | Parallellenker |
| 23 | Stift | 57 | Parallellenker |
| 24 | Nietdorn | 58 | Schrauben |
| 25 | Aufnahme | 59 | Zangenbacke |
| 26 | Ohrmarkenhälfte | 60 | Zangenbacke |
| 27 | Ausnehmung | 61 | Zangenschenkel |
| 28 | Aufnahme | 62 | Zangenschenkel |
| 29 | Ansatz | 63 | Arbeitsschenkel |
| 30 | Zangenschenkel | 64 | Arbeitsschenkel |
| 31 | Zangenschenkel | 65 | Aufsecköffnung |
| 32 | Spreizfeder | 66 | Zangenbacke |
| 33 | Zangenbacke | 67 | Zangenbacke |
| 34 | Zangenbacke | 68 | Löcher |

**Patentansprüche**

1.  Ohrmarkenzange, deren Zangenbacken Aufnahmen zur vorübergehenden, zangenseitigen Lagefixierung der am Tierohr anzubringenden Ohrmarke, bzw. Ohrmarkenhälften, aufweisen, dadurch gekennzeichnet, daß der Ohrmarkenzange auswechselbare, jeweils unterschiedlichen Ohrmarkentypen angepaßte Aufnahmen (10, 11; 18, 21; 25, 28) für die Ohrmarkenhälften (1, 2; 15, 19; 26, 22) zugeordnet sind.

2.  Ohrmarkenzange nach Anspruch 1, dadurch gekennzeichnet, daß die Aufnahmen (10, 11) aus an den Zangenbacken (33, 34) lösbar befestigten Adapterstücken (43, 44) bestehen.

3.  Ohrmarkenzange nach Anspruch 2, dadurch gekennzeichnet, daß die Adapterstücke (43, 44) T-förmig oder keilförmig und in hinterschnittenene bzw. schwalbenschwanzförmige Nuten (42)der Zangenbacken (33, 34) einschiebbar sind.

4.  Ohrmarkenzange nach Anspruch 1, dadurch gekennzeichnet, daß der Ohrmarkenzange ein Satz auswechselbarer Zangenbacken (66, 67) zugeordnet ist, welche jeweils unterschiedliche, unmittelbar an den Zangenbacken ausgebildete Aufnahmen (10, 11; 18, 21; 25, 28) aufweisen.

5.  Ohrmarkenzange nach Anspruch 1 bis 4, dadurch gekennzeichnet, daß an den sich kreuzenden Zangenschenkeln (30, 31) zwei Parallellenker (56, 57) angelenkt sind, an deren freien Enden die Zangenbacken (66, 67) angeordnet sind.

6.  Ohrmarkenzange nach Anspruch 4 oder 5, dadurch gekennzeichnet, daß die Zangenbacken (66, 67) mit einer Öffnung (65) zum Aufstecken auf die freien Enden der Arbeitsschenkel (63, 64) bzw. der Parallellenker (56, 57) versehen sind.

7.  Ohrmarke nach Anspruch 6, dadurch gekennzeichnet, daß die Zangenbacken (66, 67) mittels Schrauben oder dgl. an den Arbeitsschenkeln (63, 64) bzw. den Parallellenkern (56, 57), arretierbar sind.

8.  Ohrmarkenzange nach Anspruch 5, dadurch gekennzeichnet, daß die Parallellenker (56, 57) lösbar an den sich kreuzenden Zangenschenkeln (30, 31) angelenkt sind, daß der Ohrmarkenzange ein Satz von hinsichtlich der Ohrmarken-Aufnahmen unterschiedlichen Parallellenkern zugeordnet ist und daß die Parallellenker betriebsmäßig austauschbar sind.

9.  Ohrmarkenzange nach einem oder mehreren der Ansprüche 1 bis 8, dadurch gekennzeichnet, daß an den Zangenbacken (33, 34; 59, 60; 66, 67) verschiebbare, gegen die Kraft einer Rückstellfeder (53) zu öffnende Halterungen (45, 46) für die in die Aufnahmen eingesetzten Ohrmarkenhälften angeordnet sind.

10. Ohrmarkenzange nach einem oder mehreren der Ansprüche 1 bis 9, dadurch gekennzeichnet, daß die Zangenbacken (33, 34; 59, 60; 66, 67) und gegebenenfalls die Adapterstücke (43, 44) aus Kunststoff bestehen.

Fig. 1

Fig. 2

Fig. 3

Fig. 4

Fig.6

Fig.5

Fig.7

Fig. 9

Fig. 8

Fig. 10

**Europäisches Patentamt**

# EUROPÄISCHER RECHERCHENBERICHT

Nummer der Anmeldung

EP    92 10 6111

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | EP-A-0 044 769 (CHEVILLOT IOENTIFICATIONS S. A. R. L.) | 1,2 | A01K11/00 |
| Y | * Seite 4, Zeile 10 – Seite 5, Zeile 17 * | 5,9 | |
| | * Seite 6, Zeile 9 – Zeile 38; Abbildungen 1-4,6-11 * | | |
| | --- | | |
| Y | EP-A-0 092 408 (ALBO TIERZUCHTGERÄTE) | 5,9 | |
| A | * Seite 7, Zeile 27 – Seite 9, Zeile 8; Abbildungen 5-9 * | 1 | |
| | --- | | |
| A | CH-A-8 471 (J. BRAUCHLI) | 1-3 | |
| | * Seite 1, Spalte 2, Zeile 26 – Seite 2, Spalte 2, Zeile 2; Abbildungen * | | |
| | ----- | | |

**RECHERCHIERTE SACHGEBIETE (Int. Cl.5 )**

A01K

Der vorliegende Recherchenbericht wurde für alle Patentansprüche erstellt

| Recherchenort | Abschlußdatum der Recherche | Prüfer |
|---|---|---|
| BERLIN | 02 JUNI 1992 | MARTIN DEL RIO A. |